(19) Europäisches Patentamt / European Patent Office / Office européen des brevets

(11) **EP 4 269 475 A1**

(12) **EUROPEAN PATENT APPLICATION**
published in accordance with Art. 153(4) EPC

(43) Date of publication:
**01.11.2023 Bulletin 2023/44**

(21) Application number: **21910997.2**

(22) Date of filing: **23.12.2021**

(51) International Patent Classification (IPC):
$C08J\ 3/20$ (2006.01)    $C08K\ 5/09$ (2006.01)
$C08K\ 5/098$ (2006.01)    $C08L\ 29/04$ (2006.01)
$C08K\ 3/32$ (2006.01)    $C08K\ 3/38$ (2006.01)

(52) Cooperative Patent Classification (CPC):
**C08J 3/20; C08K 3/32; C08K 3/38; C08K 5/09;
C08K 5/098; C08L 29/04**

(86) International application number:
**PCT/JP2021/047995**

(87) International publication number:
**WO 2022/138858 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.12.2020 JP 2020215531**

(71) Applicant: **Kuraray Co., Ltd.
Kurashiki-shi, Okayama 710-0801 (JP)**

(72) Inventors:
• **KATAHIRA, Eriko**
 **Okayama-shi, Okayama 702-8601 (JP)**
• **KIDA, Noriyuki**
 **Okayama-shi, Okayama 702-8601 (JP)**
• **SHIOTA, Hirotaka**
 **Okayama-shi, Okayama 702-8601 (JP)**

(74) Representative: **Müller-Boré & Partner
Patentanwälte PartG mbB
Friedenheimer Brücke 21
80639 München (DE)**

(54) **METHOD FOR PRODUCING ETHYLENE-VINYL ALCOHOL COPOLYMER RESIN COMPOSITION**

(57) A method of producing an ethylene-vinyl alcohol copolymer resin composition comprises feeding water-containing pellets of an ethylene-vinyl alcohol copolymer from 0°C to 80°C and an additive to an extruder (X) for melt kneading, wherein the additive includes at least one selected from the group consisting of carboxylic acid, a boron compound, a phosphoric acid compound, an alkali metal salt, and an alkaline earth metal salt, the additive is added to the ethylene-vinyl alcohol copolymer in the extruder (X), a melt in the extruder (X) has a temperature $T_0$ from 70°C to 180°C and the extruder (X) has a cylinder temperature $T_1$ from 65°C to 175°C, $T_0$ and $T_1$ satisfy an expression (1) below $5 \le T_0 - T_1 \le 100 (1)$, and the water-containing pellets fed to the extruder (X) has a water content from 20 to 60 mass% and a water-containing resin composition immediately after extrusion from the extruder (X) has a water content from 10 to 35 mass%. The production method allows, in the method comprising melt kneading the water-containing ethylene-vinyl alcohol copolymer pellets and the minor component in the extruder, followed by extrusion, highly efficient dewatering of the water-containing ethylene-vinyl alcohol copolymer pellets and also causes the EVOH resin composition thus obtained that has less foam and has a good hue.

EP 4 269 475 A1

**Description**

TECHNICAL FIELD

The present invention relates to a method of producing an ethylene-vinyl alcohol copolymer resin composition.

BACKGROUND ART

An ethylene-vinyl alcohol copolymer (hereinafter, may be referred to as EVOH) is a polymer material excellent in oxygen barrier properties, aroma retention, grease resistance, antistatic properties, mechanical strength, and the like and widely used by being shaped into films, sheets, containers, and the like. A general method of producing such an EVOH includes a method comprising saponifying an ethylene-vinyl ester copolymer obtained by copolymerizing ethylene with a vinyl ester, such as vinyl acetate, in an organic solvent containing an alcohol in the presence of a saponification catalyst.

As a post-treatment method for the alcohol solution of the EVOH obtained by saponification, there are known methods, such as a method (Patent Document 1) that adds water to a methanol solution of the EVOH in an amount to the extent of precipitating no EVOH to produce a methanol/water mixed solution of the EVOH and extrudes the produced mixed solution in water or a methanol/water solution with a methanol concentration lower than the produced mixed solution for precipitation in a strand and then cutting to obtain water-containing EVOH pellets and a method (Patent Document 2) that introduces the alcohol solution of the EVOH into an apparatus and contacts the solution with water in the apparatus to convert the alcohol in the solution to water and then cuts the water-containing EVOH composition taken out of the apparatus to obtain water-containing EVOH pellets.

Meanwhile, there are various methods of shaping EVOH pellets into various shaped articles and are often melt molded using an extruder in general, such as extrusion molding and injection molding. In this situation, the shaping process is started by putting EVOH pellets as a material in a hopper of an extruder or the like. However, the melting temperature has to be 200°C or more during usual process of shaping an EVOH, and thus EVOH containing no additives is prone to be degraded during melt molding and sometimes causes fish eyes, hard spots, and the like in final products, resulting in a decrease in the quality.

To solve such a problem, there are known methods that adds a minor component, such as an acidic material and a metal salt, to an EVOH. As an example, Patent Document 2 describes a method that water-containing EVOH pellets and a minor component are melt kneaded in an extruder and then extruded in order to improve the quality, such as thermal stability.

PRIOR ART DOCUMENT

PATENT DOCUMENT

Patent Document 1: JP 2000-239316 A
Patent Document 2: JP 2002-284811 A

SUMMARY OF THE INVENTION

PROBLEMS TO BE SOLVED BY THE INVENTION

The method that water-containing EVOH pellets and a minor component are melt kneaded in an extruder and then extruded allows addition and dewatering of the minor component in the extruder and is thus a useful method that is capable of reducing the production costs. However, foaming sometimes occurs in the water-containing EVOH resin composition pellets extruded by the conventional method, and during shaping process of the EVOH resin composition after drying containing the foamed pellets, the extrusion of the molten resin becomes unstable and the shaping process cannot be stably performed in some cases.

The present invention has been made to solve the above problems, and it is an object thereof to provide a production method comprising melt kneading water-containing EVOH pellets and a minor component in an extruder, followed by extrusion, the method being capable of highly efficiently dewatering the water-containing EVOH pellets and also obtaining an EVOH resin composition that has less foam and a good hue.

MEANS FOR SOLVING THE PROBLEMS

The above problems are solved by providing a method of producing an EVOH resin composition, comprising feeding water-containing pellets of EVOH from 0°C to 80°C and an additive to an extruder (X) for melt kneading, wherein the additive includes at least one selected from the group consisting of carboxylic acid, a boron compound, a phosphoric acid compound, an alkali metal salt, and an alkaline earth metal salt, the additive is added to the EVOH in the extruder (X), a melt in the extruder (X) has a temperature $T_0$ from 70°C to 180°C and the extruder (X) has a cylinder temperature $T_1$ from 65°C to 175°C, $T_0$ and $T_1$ satisfy an expression (1) below

$$5 \leq T_0\text{-}T_1 \leq 100 \qquad (1),$$

and
the water-containing pellets fed to the extruder (X) has a water content from 20 to 60 mass% and a water-containing resin composition immediately after extrusion from the extruder (X) has a water content from 10 to 35 mass%.
In this context, it is preferred that the additive is an aqueous solution containing at least one selected from the group consisting of carboxylic acid, a boron compound, a phosphoric acid compound, an alkali metal salt, and an alkaline earth metal salt.

EFFECTS OF THE INVENTION

The production method of the present invention is capable of, in the method comprising melt kneading water-containing EVOH pellets and a minor component in an extruder, followed by extrusion, highly efficiently dewatering the water-containing EVOH pellets and also obtaining an EVOH resin composition that has less foam and a good hue.

BRIEF DESCRIPTION OF THE DRAWINGS

Fig. 1 is a diagram illustrating cylinder configuration and screw configuration of a twin-screw extruder (extruder (X)) in Examples 1 - 8 and Comparative Examples 1 - 3, 6.
Fig. 2 is a diagram illustrating cylinder configuration and screw configuration of a twin-screw extruder (extruder (X)) in Comparative Example 4.
Fig. 3 is a diagram illustrating cylinder configuration and screw configuration of a twin-screw extruder (extruder (X)) in Comparative Example 5.

MODES FOR CARRYING OUT THE INVENTION

The present invention is a method of producing an EVOH resin composition, comprising feeding water-containing pellets of EVOH from 0°C to 80°C and an additive to an extruder (X) for melt kneading, wherein the additive includes at least one selected from the group consisting of carboxylic acid, a boron compound, a phosphoric acid compound, an alkali metal salt, and an alkaline earth metal salt, the additive is added to the EVOH in the extruder (X), a melt in the extruder (X) has a temperature $T_0$ from 70°C to 180°C and the extruder (X) has a cylinder temperature $T_1$ from 65°C to 175°C, $T_0$ and $T_1$ satisfy an expression (1) below

$$5 \leq T_0\text{-}T_1 \leq 100 \qquad (1),$$

and
the water-containing pellets fed to the extruder (X) has a water content from 20 to 60 mass% and a water-containing resin composition immediately after extrusion from the extruder (X) has a water content from 10 to 35 mass%. Such a production method is capable of highly efficiently dewatering water-containing EVOH pellets and also obtaining an EVOH resin composition that has less foam and a good hue. Although the reason is uncertain, it is assumed that providing the water content of the water-containing EVOH pellets fed to the extruder (X) and $T_0\text{-}T_1$ in appropriate ranges causes the water-containing EVOH pellets in the extruder to be in a specific state of shear and melting and the water contained in the extruded water-containing EVOH to be uniformly and appropriately dispersed and thus foaming is less likely to occur. Such an effect of inhibiting foaming while achieving high dewatering efficiency is exhibited only by the production conditions of the present invention and is a finding obtained only after the intensive studies by the present inventors. Moreover, although the present inventors have found that foaming is more prone to occur by feeding an additive to the extruder (X) compared with the case of feeding no additive, surprisingly however, the production method of the present invention exhibits the effect of inhibiting foaming while achieving high dewatering efficiency even in such a condition.

Herein, a water-containing resin composition or a water-containing EVOH resin composition mean a resin composition in a water-containing state containing an additive extruded from the extruder (X), and an EVOH resin composition means a resin composition after drying obtained by drying the water-containing EVOH resin composition.

Although the present invention uses a method comprising melt kneading water-containing EVOH pellets and a minor component in the extruder (X), followed by extruding, other known methods of obtaining EVOH resin composition pellets to which a minor component is added include: (1) a method including immersing water-containing EVOH pellets in an aqueous solution containing a minor component, deliquoring them, followed by drying; and the like. However, the addition method (1) above has a problem of increasing production costs because a treatment bath and a treatment tower are required for immersing the water-containing EVOH pellets and also the energy consumption is high for drying the water-containing EVOH resin composition pellets after the treatment. Accordingly, the method of adding a minor component in the production method of the present invention is considered as an efficient method compared with other addition methods.

The water-containing EVOH used in the present invention is pellets containing an EVOH and water. The water-containing pellets have a water content from 20 to 60 mass% and may have an EVOH content percentage from 40 to 80 mass%. As described later, the water-containing EVOH pellets may contain another component, such as an alcohol and an alkali metal salt.

An EVOH constituting the water-containing EVOH pellets used in the present invention (hereinafter, may be expressed as an "EVOH to be used in the present invention" or "the EVOH") is usually obtained by saponifying an ethylene-vinyl ester copolymer. The ethylene content in the EVOH is preferably from 20 to 60 mol%. From the perspective of improving the melt moldability, the ethylene content is preferably 23 mol% or more, more preferably 25 mol% or more, and even more preferably 30 mol% or more. Meanwhile, from the perspective of improving the gas barrier properties, the ethylene content is preferably 55 mol% or less and more preferably 50 mol% or less.

A specific description is given below on the method of producing the EVOH. As described earlier, the EVOH is usually obtained by saponifying an ethylene-vinyl ester copolymer. Copolymerization of ethylene with a vinyl ester may be any one of solution polymerization, suspension polymerization, emulsion polymerization, and bulk polymerization. The copolymerization may be either in a continuous or batch process, and the polymerization conditions in the case of solution polymerization are as follows.

A solvent to be used is preferably an alcohol with a boiling point of 100°C or less because of the solubility of the ethylene-vinyl ester copolymer and the EVOH, the handleability, the capability of efficiently converting the alcohol to water, and the like. The boiling point is more preferably 80°C or less and even more preferably 70°C or less.

Examples of the alcohol with a boiling point of 100°C or less include methanol, ethanol, n-propyl alcohol, isopropyl alcohol, t-butyl alcohol, and the like, and methanol is particularly preferred.

Examples of an initiator used for the polymerization include: azonitrile initiators, such as 2,2-azobisisobutyronitrile, 2,2-azobis-(2,4-dimethylvaleronitrile), 2,2-azobis-(4-methoxy-2,4-dimethylvaleronitrile), and 2,2-azobis-(2-cyclopropylpropionitrile); organic peroxide initiators, such as isobutyryl peroxide, cumyl peroxyneodecanoate, diisopropyl peroxycarbonate, di-n-propyl peroxydicarbonate, t-butyl peroxyneodecanoate, lauroyl peroxide, benzoyl peroxide, and t-butyl hydroperoxide; and the like.

Examples of the vinyl ester include fatty acid vinyl esters, such as vinyl acetate, vinyl propionate, and vinyl pivalate, and vinyl acetate is preferred. In addition, the EVOH may contain 0.0002 to 0.2 mol% of a vinylsilane compound as a copolymerization component. Examples of the vinylsilane-based compound include vinyltrimethoxysilane, vinyltriethoxysilane, vinyltri($\beta$-methoxy-ethoxy)silane, and $\gamma$-methacryloxypropylmethoxysilane. Among them, vinyltrimethoxysilane and vinyltriethoxysilane are preferably used.

The polymerization conditions are preferably as follows.

(1) Temperature: preferably from 20°C to 90°C, more preferably from 40°C to 80°C.
(2) Time (in the case of continuous polymerization, average residence time): preferably from 2 to 15 hours, more preferably from 3 to 11 hours.
(3) Degree of polymerization: based on the charged vinyl ester, preferably from 10% to 90%, more preferably from 30% to 80%.
(4) Resin content in the solution after polymerization: preferably from 5 to 85 mass%, more preferably from 20 to 70 mass%.

It should be noted that the polymerization may be carried out in the presence of a small amount of a monomer other than ethylene and the vinyl ester copolymerizable with them, for example: $\alpha$-olefins, such as propylene, butylene, isobutylene, pentene, hexene, $\alpha$-octene, and $\alpha$-dodecene; alkenes with an ester group, such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane; unsaturated acids, such as acrylic acid, methacrylic acid, crotonic acid, maleic acid, and itaconic acid, anhydrides, salts , mono- and di-alkyl esters thereof; nitriles, such as acrylonitrile and methacrylonitrile; amides, such as acrylamide and methacrylamide; olefin sulfonic acids, such as ethylene sulfonic acid, allyl sulfonic acid, and methallyl sulfonic acid, and salts thereof; alkyl vinyl ethers; vinyl ketone; N-vinyl pyrrolidone; vinyl chloride; vinylidene chloride; and the like. The content of the monomer units other than ethylene, the vinyl ester, and the vinyl alcohol in the EVOH is preferably 20 mol% or less, and in some cases, preferably 10 mol% or less, 5 mol% or less, 3 mol% or less, 1 mol% or less, and 0.1 mol% or less. The EVOH may contain no such another monomer unit.

The polymerization is carried out for a predetermined time, and after reaching a predetermined degree of polymerization, a polymerization inhibitor is added as needed and unreacted ethylene gas is removed by evaporation, followed by purging unreacted vinyl ester. Examples of the method of purging unreacted vinyl ester to be employed include a method comprising: continuously feeding the polymerization solution from which ethylene has been removed from the upper portion of a tower packed with Raschig rings at a fixed rate; blowing vapor of an organic solvent, preferably an alcohol with a boiling point of 100°C or less, most preferably methanol into the tower from a lower portion of the tower; distilling mixed vapor of the organic solvent and the unreacted vinyl ester from the top of the tower; and discharging a copolymer solution from which the unreacted vinyl ester has been removed from the bottom of the tower, and the like.

To the copolymer solution from which the unreacted vinyl ester has been removed, an alkaline catalyst is added to saponify vinyl ester components in the copolymer. The saponification method may be either a continuous or batch process. The alkaline catalyst to be used may be sodium hydroxide, potassium hydroxide, alkali metal alcoholate, and the like. The solvent used for the saponification is preferably methanol. For example, the saponification conditions are as follows.

(1) Concentration of the ethylene-vinyl ester copolymer in the solution: from 10 to 50 mass%.
(2) Reaction temperature: from 30°C to 150°C
(3) Amount of the catalyst to be used: from 0.005 to 0.6 equivalents (based on the vinyl ester components)
(4) Time (average residence time in the case of continuous polymerization): from 10 minutes to 6 hours.

In general, continuous saponification allows more efficient removal of methyl acetate generated by the saponification, and thus a resin with a high degree of saponification is obtained using a less amount of the catalyst compared with a case of batch saponification. In the case of continuous polymerization, saponification has to be carried out at a higher temperature to prevent precipitation of the EVOH generated by the saponification. Accordingly, in continuous saponification, the reaction temperature and the amount of the catalyst are preferably in the following ranges.

Reaction temperature: from 70°C to 150°C.
Amount of the catalyst to be used: from 0.005 to 0.1 equivalents (based on the vinyl ester components)

The degree of saponification of the EVOH to be obtained depends on the intended use while the degree is preferably 80 mol% or more of the vinyl ester components, more preferably 95 mol% or more, even more preferably 98 mol% or more, and particularly preferably 99 mol% or more. The degree of saponification may be arbitrarily adjusted by the conditions.

As described earlier, for particularly producing EVOH pellets that are excellent in melt stability and have good productivity in long-run operation, the EVOH preferably has a degree of saponification of 99.7 mol% or more, more preferably 99.8 mol% or more, even more preferably 99.9 mol% or more, and particularly preferably 99.95 mol% or more, and it is still preferred to further adjust the saponification conditions as below for obtaining such an EVOH.

The method of obtaining the EVOH with a high degree of saponification of 99.9 mol% or more is preferably a continuous process. Examples of the method of obtaining a high degree of saponification in the continuous process include: a method comprising adding the catalyst from a plurality of portions of the saponification reaction tower; a method comprising increasing the amount of the catalyst to be used; a method comprising increasing the amount of methanol to be blown from the lower portion of the saponification reaction tower; and the like. Meanwhile, examples of the method of obtaining the EVOH with a high degree of saponification of 99.9 mol% or more in the batch process include: a method comprising adding the catalyst by division into a plurality of times; a method comprising increasing the amount of the catalyst to be used; a method comprising increasing the amount of methanol vapor or nitrogen gas to be blown into the saponification reaction vessel; and the like.

By the saponification step, a solution or a paste containing the EVOH is obtained. Since the EVOH after saponification reaction contains the alkaline catalyst, by-product salts, such as sodium acetate and potassium acetate, and other impurities, they may be removed by neutralization and washing as needed. In this situation, when the EVOH after saponification reaction is washed with deionized water, or the like, containing almost no metal ions, chloride ions, and the like, the catalyst residues, such as sodium acetate and potassium acetate, may be partially remained in the EVOH.

The EVOH solution or paste thus obtained usually contains 50 parts by mass or more of an alcohol with a boiling point of 100°C or less based on 100 parts by mass of the EVOH. The alcohol content is preferably 70 parts by mass or more and more preferably 80 parts by mass or more. The alcohol content is also preferably 1000 parts by mass or less and more preferably 500 parts by mass or less. The alcohol content in this range allows efficient resin production while securing the fluidity of the EVOH solution. The alcohol is preferably methanol.

Then, the EVOH solution or paste thus obtained is processed into water-containing pellets. The method of processing into water-containing pellets is not particularly limited, and examples of the method include: a method comprising cooling and solidifying the EVOH solution or paste for cutting; a method comprising melt kneading the EVOH solution or paste by the extruder, followed by extruding for cutting; and the like. Specific examples of the method of cutting the EVOH include: a method comprising extruding the EVOH in a strand, followed by cutting with a pelletizer; a method comprising cutting the EVOH extruded from a die by a hot cutting system, an underwater cutting system, or the like; and the like.

Examples of the method comprising cooling and solidifying the EVOH solution or paste after saponification reaction for cutting include a method comprising extruding an alcohol/water mixed solution of the EVOH in a solidification liquid, precipitating in a strand, followed by cutting. As the post-treatment method for the EVOH solution after saponification reaction, it is preferred that, in the tower type vessel, mixed vapor of the solvent and water is fed from a lower portion of the vessel and the EVOH solution is fed from a position above the position of feeding the mixed vapor to partially convert the solvent in the feed EVOH solution to water and to produce an EVOH solution with a high concentration. The EVOH in the EVOH solution to be fed to the tower type vessel preferably has a concentration from 15 to 50 mass% and more preferably from 25 to 40 mass%. It is also preferred that the mass ratio of the amount of the feed EVOH solution to the amount of the feed mixed vapor (feed solution amount/feed vapor amount) is from 100/400 to 100/8. Further, the water content in the mixed vapor is preferably from 20 to 70 mass%. The solvent to be used for the mixed vapor is preferably an alcohol with a boiling point of 130°C or less, and examples of such an alcohol include alcohols, such as methanol, ethanol, propanol, and butanol. The solvent is more preferably an alcohol with a boiling point of 100°C or less, and among them, methanol is preferred due to the availability, the inexpensiveness, the low boiling point, and the handleability.

For pelletization of the EVOH solution by extrusion in a strand, examples of the solidification liquid to be used for precipitation include: water and a water/alcohol mixed solvent; aromatic hydrocarbons, such as benzene; ketones, such as acetone and methyl ethyl ketone; ethers, such as dipropyl ether; organic acid esters, such as methyl acetate, ethyl acetate, and methyl propionate; and the like, and from the perspective of the handleability, water or a water/alcohol mixed solvent is preferred. An alcohol, such as methanol, ethanol, and propanol, is used as the above alcohol, and methanol is industrially preferably used. The mass ratio of the solidification liquid to the EVOH strand (solidification liquid / EVOH strand) in the solidification liquid is preferably, but not particularly limited to, 50 or more and 10,000 or less. The mass ratio in the above range allows production of water-containing EVOH pellets with a uniform size distribution.

The temperature of contacting the EVOH solution with the solidification liquid (bath temperature for pelletization) preferably has a lower limit of -10°C and more preferably 0°C. Meanwhile, the upper limit is preferably 40°C, more preferably 20°C, even more preferably 15°C, and still more preferably 10°C. The EVOH solution is extruded in a strand in the solidification liquid described above by an arbitrarily shaped nozzle. The shape of such a nozzle is preferably, but not particularly limited to, a cylindrical shape. The EVOH solution is thus extruded in a strand from the nozzle. In this situation, the extrusion does not have to be in one strand and may be in an arbitrary number from several to hundreds of strands. Then, the EVOH extruded in a strand is cut after sufficiently solidified to obtain the water-containing EVOH pellets. The pellets may then be washed as described later as needed. Such a pellet may have a size of, for example, 1 mm or more and 10 mm or less in diameter and 1 mm or more and 10 mm or less in length in the case of a columnar shape and 1 mm or more and 10 mm or less in diameter in the case of a spherical shape.

When the EVOH solution or paste is melt kneaded by the extruder, followed by extrusion and cutting, as the post-treatment method for the EVOH solution or paste after saponification reaction, it is preferred that, in the tower type vessel, water vapor is fed from a lower portion of the vessel and the EVOH solution or paste is fed from a position above the position of feeding the water vapor to let out the solvent (alcohol) in the feed EVOH solution or paste together with the water vapor and to take a water-containing EVOH, containing from 0 to 10 parts by mass of the solvent (alcohol) and from 10 to 1000 parts by mass of water based on 100 parts by mass of the EVOH, out of the vessel. A too small amount of the introduced water vapor causes reduction in the solvent (alcohol) removal efficiency, and on the other hand, a too large amount causes a disadvantage in the costs, and thus the amount of the introduced water vapor is preferably from 0.3 to 30 times the amount of the introduced EVOH solution or paste in the mass ratio, more preferably from 0.5 to 10 times, and even more preferably from 0.7 to 5 times. The water vapor to contact the EVOH solution or paste may contain 10 parts by mass or less of the solvent (alcohol) based on 100 parts by mass of the water vapor, whereas it is preferred to contain no solvent (alcohol) in the water vapor in order to efficiently remove the solvent (alcohol).

In this case, the EVOH solution or paste directly contacts the water vapor in the vessel and the content of the solvent (alcohol) gradually decreases, and in the meantime, the EVOH is in a swollen paste and can be taken out of the vessel without gelation while maintaining the fluidity. Although dissolved in a methanol/water mixed solvent at atmospheric pressure approximately at a temperature, for example, from 60°C to 70°C, the EVOH is not dissolved at atmospheric pressure in the case of the solvent of water only. However, in the presence of pressurized water vapor at a temperature of, for example, 100°C or more, the EVOH is capable of maintain the fluidity even in a state of substantially containing water only.

The water-containing EVOH taken out of the vessel preferably contains from 0 to 10 parts by mass of the solvent (alcohol) and from 10 to 1000 parts by mass of water based on 100 parts by mass of the EVOH, and is taken out of the vessel in a fluidized state. The water-containing EVOH taken out of the vessel preferably has a content of the solvent (alcohol) from 0 to 5 parts by mass, more preferably from 0 to 1 part by mass, and even more preferably from 0 to 0.1 parts by mass. A small content of the solvent (alcohol) allows prevention of vaporization of the solvent (alcohol) in later steps and thus allows preservation of the working environment and the surrounding environment. In addition, a temperature rise in the washing liquid causes the pellets to be less likely to stick to each other while washing the saponification catalyst residues and the like, and thus such a small content also allows a rise in the washing temperature, also resulting in a rise in the washing speed. The water content in the water-containing EVOH taken out of the vessel is preferably 10 parts by mass or more, more preferably 30 parts by mass or more, and even more preferably 50 parts by mass or more. The water content of 10 parts by mass or more tends to cause good fluidity in the vessel. Meanwhile, the water content taken out of the vessel is preferably 1000 parts by mass or less, more preferably 500 parts by mass or less, and even more preferably 200 parts by mass or less. The water content of 1000 parts by mass or less tends to allow production of uniform pellets in a pellet production step described later.

The water-containing EVOH taken out of the vessel is processed by a method, for example, in which the water-containing EVOH is directly cut in a molten state and the cut pellets are water cooled or in which the water-containing EVOH in a molten state is extruded in a strand in a cooling liquid for solidification and then cutting to produce the water-containing EVOH pellets. For pelletizing the EVOH taken out of the vessel, it is preferred that the water-containing EVOH is fed to an extruder (different from the extruder (X)) and directly cut in a molten state and water cooled to produce the water-containing EVOH pellets. When the water-containing EVOH taken out of the vessel is fed to the extruder, the water content of the water-containing EVOH to be obtained may be adjusted by the conditions of the extruder. Preferred examples of the method of directly cutting the water-containing EVOH in a molten state include a hot cutting system and an underwater cutting system. From the perspective of the ease of handling the pellets, a nozzle preferably has a diameter from 2 to 5 mmφ (φ denotes a diameter. Hereinafter the same). The pellets to be produced may have a size of, for example, 1 mm or more and 10 mm or less in diameter in the case of a spherical shape (or an approximately spherical shape), and 1 mm or more and 10 mm or less in diameter and 1 mm or more and 10 mm or less in length in the case of a columnar shape. It should be noted that columnar pellets are obtained by extrusion in a strand for solidification and then cutting and spherical (or approximately spherical) pellets are obtained by direct cutting in a molten state. Such a method comprising cutting the EVOH in a molten state is excellent in productivity, not having to consider the draw rate to stably form a strand, compared with the method comprising extrusion in a solidification liquid for solidification in a strand and then cutting. For example, even if a strand is not readily formed as in the case of an EVOH with a low ethylene content, cutting in a molten state facilitates production of the water-containing EVOH pellets.

Although water is used as the cooling liquid for the water cooling and the like, the cooling liquid may contain a small amount of an alcohol. The temperature of the cooling liquid is preferably from 0°C to 50°C, and the temperature of the water-containing EVOH in a molten state when extruded is preferably from 100°C to 150°C. The temperature difference allows cooling and solidification of the water-containing EVOH in a short time. The temperature of the cooling liquid is more preferably from 0°C to 30°C. The temperature of the water-containing EVOH in a molten state is more preferably from 110°C to 140°C.

The water-containing EVOH pellets thus obtained may be used as the water-containing EVOH pellets to be fed to the extruder (X). The water-containing EVOH pellets after being subjected to a washing step described later may also be used as the water-containing EVOH pellets to be fed to the extruder (X). In the resin constituting the water-containing EVOH pellets to be fed to the extruder (X), the proportion of the EVOH is preferably 90 mass% or more, more preferably 95 mass% or more, and even more preferably 99 mass% or more, and the resin particularly preferably consists only of the EVOH. In the water-containing EVOH pellets, the proportion of the EVOH and water is 90 mass% or more, more preferably 95 mass% or more, and even more preferably 99 mass% or more, and the water-containing EVOH pellets particularly preferably consist only of the EVOH and water. Moreover, if the water-containing EVOH pellets contain the saponification catalyst residues, the proportion of the EVOH, water, and the saponification catalyst residues in the water-containing EVOH pellets is preferably 90 mass% or more and more preferably 95 mass% or more, even more preferably 99 mass% or more, and the water-containing EVOH pellets particularly preferably consist only of the EVOH, water, and the saponification catalyst residues.

Although the water-containing EVOH pellets to be obtained after saponification reaction may contain an alkali metal salt as the saponification catalyst residues, a large amount of the content causes a problem of the quality, such as coloring, and thus a step of washing and removing the saponification catalyst residues may be performed. The washing method is not particularly limited, and examples of the method include a washing method comprising immersing the pellets in water or an aqueous solution of an acid, such as acetic acid, a washing method comprising feeding water, an aqueous solution of an acid, or the like to the extruder (X); and the like. In this situation, in the washing method of immersing the pellets in water or the aqueous solution, either a batch treatment vessel or a continuous treatment vessel may be used. Among them, a method comprising continuously feeding the pellets to the tower type vessel for treatment is preferred from the perspective of productivity. The washing temperature to be employed is usually in a range from 10°C to 80°C. From the perspective of improving the washing efficiency, the washing temperature is preferably high while a too high temperature is not preferred because of causing bonding of the water-containing pellets to each other. The lower limit of the washing temperature is preferably 20°C or more. The upper limit of the washing temperature is preferably 70°C or less.

The alkali metal salt content in the water-containing EVOH pellets after washing is, in terms of metal, preferably 5 mass% or less, more preferably 1 mass% or less, even more preferably 0.1 mass% or less, still more preferably 0.05 mass% or less, and particularly preferably 0.03 mass% or less.

The water-containing EVOH pellets thus obtained may have a water content adjusted through a dewatering step and the like. The dewatering method is not particularly limited and examples of the method include centrifugally dewatering and the like.

The method of producing the EVOH resin composition pellets of the present invention includes a step of feeding the water-containing EVOH pellets obtained by the above method and the like and an additive to the extruder (X) for melt kneading. The water-containing EVOH pellets used in such a step has a temperature from 0°C to 80°C and a water content from 20 to 60 mass%.

The temperature of the water-containing EVOH pellets to be fed to the extruder (X) is 0°C or more, preferably 10°C or more, and more preferably 25°C or more. A temperature of the water-containing EVOH pellets to be fed to the extruder (X) of less than 0°C is prone to cause a problem in feedability of the water-containing EVOH pellets and a tendency of not completely melting the EVOH, increasing foamed pellets, and degrading a hue. The temperature of the water-containing EVOH pellets to be fed to the extruder (X) is 80°C or less, preferably 75°C or less, and more preferably 65°C or less. A temperature of the water-containing EVOH pellets to be fed to the extruder (X) of more than 80°C causes instability of the water content in the water-containing EVOH pellets to be fed and a tendency of not completely melting the EVOH in the extruder (X), increasing foamed pellets, and degrading a hue. The temperature of the water-containing EVOH pellets to be fed to the extruder (X) may be appropriately adjusted by the conditions before being fed to the extruder (X).

The water-containing EVOH pellets to be fed to the extruder (X) has to have a water content from 20 to 60 mass%. The water content of 20 mass% or more causes the EVOH resin composition thus obtained to have a good hue. The water content is preferably 25 mass% or more, more preferably 30 mass% or more, and even more preferably 35 mass% or more. Meanwhile, the water content of less than 60 mass% inhibits foaming of the EVOH resin composition. The water content is preferably 55 mass% or less and more preferably 45 mass% or less. The water content of the water-containing EVOH pellets may be adjusted by the conditions for pelletizing the water-containing EVOH after saponification reaction, the conditions for washing the water-containing EVOH pellets, the conditions for dewatering the water-containing EVOH pellets, and the like.

As long as the effects of the present invention are not impaired, the water-containing EVOH pellets to be fed to the extruder (X) may contain an alcohol. The alcohol content in the water-containing EVOH pellets is usually 10 mass% or less, preferably 5 mass% or less, more preferably 1 mass% or less, and even more preferably 0.1 mass% or less.

The additive to be fed to the extruder (X) includes at least one selected from the group consisting of carboxylic acid, a boron compound, a phosphoric acid compound, an alkali metal salt, and an alkaline earth metal salt. Containing such an additive causes the EVOH resin composition thus obtained to have a good hue.

Examples of the carboxylic acid include oxalic acid, succinic acid, benzoic acid, citric acid, acetic acid, propionic acid, lactic acid, and the like. Among them, acetic acid, propionic acid, and lactic acid are preferred from the perspective of costs, availability, and the like. When the EVOH resin composition contains carboxylic acid, the content is preferably from 1 to 500 ppm based on the total solid contents. The lower limit of the carboxylic acid content is more preferably 10 ppm or more and even more preferably 50 ppm or more. The upper limit of the carboxylic acid content is preferably 400 ppm or less and more preferably 300 ppm or less. The carboxylic acid content in the EVOH resin composition is measured by the method described in Examples. The carboxylic acid content of 1 ppm or more tends to inhibit coloring during melt molding. The carboxylic acid content of 500 ppm or less tends to cause good thermal stability.

Examples of the boron compound include boric acids, borate esters, borates, boron hydrides, and the like but not limited to them. Specifically, examples of the boric acids include orthoboric acid, metaboric acid, tetraboric acid, and the like; examples of the borate esters include triethyl borate, trimethyl borate, and the like; and examples of the borates include alkali metal salts and alkaline earth metal salts of the above various boric acids, borax, and the like. Among these compounds, orthoboric acid (hereinafter, referred to simply as boric acid) is preferred. When the EVOH resin composition contains the boron compound, the content in terms of boron is preferably from 10 to 2000 ppm based on the total solid contents and more preferably from 50 to 1000 ppm. The boron compound content in the above range tends to cause good thermal stability and moldability. The content of the boron compound, the phosphoric acid compound, the alkali metal salt, or the alkaline earth metal salt in the EVOH resin composition is measured by the method described in Examples.

Examples of the phosphoric acid compound include various acids, such as phosphoric acid and phosphorous acid, and salts thereof, and the like. The phosphate may be contained in any form of primary phosphate, secondary phosphate, and tertiary phosphate, and the cationic species is preferably, but not particularly limited to, an alkali metal salt or an alkaline earth metal salt. Among them, the phosphoric acid compound is preferably added in the form of sodium dihydrogen phosphate, potassium dihydrogen phosphate, disodium hydrogen phosphate, or dipotassium hydrogen phosphate. When the EVOH resin composition contains the phosphoric acid compound, the content in terms of the phosphorus element is preferably from 1 to 1000 ppm based on the total solid contents. The addition in such a range allows inhibition of coloring, gels, and hard spots in shaped articles.

Examples of the alkali metal salt include aliphatic carboxylate, aromatic carboxylate, phosphate, metal complexes, and the like of monovalent metal. Specific examples include sodium acetate, potassium acetate, sodium phosphate, lithium phosphate, sodium stearate potassium stearate, sodium salt of ethylenediaminetetraacetic acid, and the like. Among them, sodium acetate, potassium acetate, and sodium phosphate are preferred. When the EVOH resin composition contains the alkali metal salt, the content in terms of the alkali metal element is preferably from 5 to 5000 ppm based on the total solid contents, more preferably from 20 to 1000 ppm, and even more preferably from 30 to 750 ppm. The alkali metal element content of 5 ppm or more allows effective improvement in the interlayer adhesion and the compatibility, and the content of 5000 ppm or less increases the thermal stability during melt molding even more.

Examples of the alkaline earth metal salt include magnesium salts, calcium salts, barium salts, beryllium salts, and the like, and magnesium salts and calcium salts are particularly preferred. The anionic species of the alkaline earth metal salt is preferably, but not particularly limited to, acetate or phosphate. When the EVOH resin composition contains the alkaline earth metal salt, the content in terms of the alkaline earth metal element is preferably from 10 to 1000 ppm based on the total solid contents and more preferably from 20 to 500 ppm. The alkaline earth metal content of 10 ppm or more tends to cause good productivity in long-run operation. The content of 1000 ppm or less tends to inhibit coloring while the resin is melted.

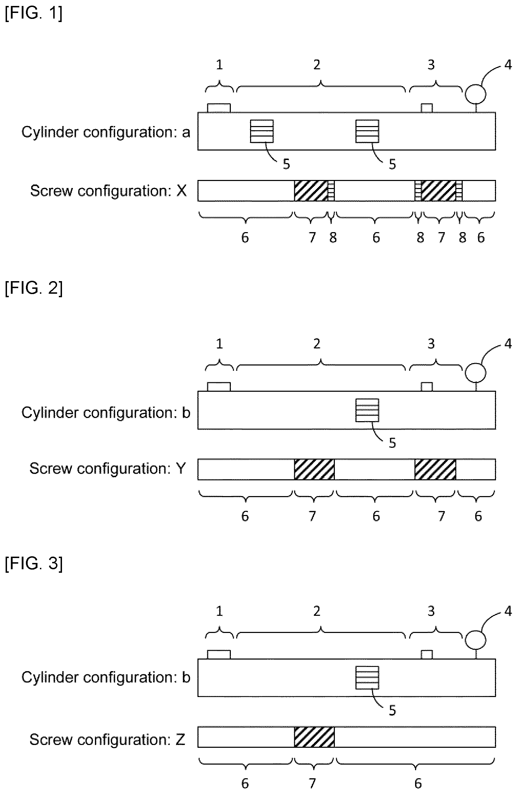

Both the additive and the water-containing EVOH pellets are fed to the extruder (X) and melt kneaded to obtain a water-containing EVOH resin composition. Fig. 1 is a diagram illustrating cylinder configuration and screw configuration of a twin-screw extruder in Examples 1 - 8 and Comparative Examples 1 - 3, 6. With reference to Fig. 1, an embodiment of the method of melt kneading the water-containing EVOH pellets and the additive is specifically described. The extruder (X) used for melt kneading the water-containing EVOH pellets and the additive is preferably a twin-screw extruder, and among all, a co-rotating twin-screw extruder with the screws rotating in the same direction. The extruder preferably has an LID of 15 or more. As the cylinder, a block cylinder or the like is used. As the screws, those of a segment type and the like are used. The screw rotation speed is preferably from 320 to 1000 rpm. The screw rotation speed in such a range facilitates adjustment of the temperature of the melt in the extruder (X). The screw rotation speed is more preferably 400 rpm or more, even more preferably 500 rpm or more, and particularly preferably 550 rpm or more. Meanwhile, the number of screw rotations is more preferably 800 rpm or less, even more preferably 700 rpm or less, and particularly preferably 650 rpm or less.

The water-containing EVOH pellets are put from a material feed area 1. Meanwhile, the additive is put from a minor component addition area 3. In the present invention, the additive is thus added to the water-containing EVOH in the extruder (X). This allows uniform mixing of the additive to the water-containing EVOH, causing the water-containing EVOH resin composition thus obtained to have a good hue. Each additive may be individually added while a plurality of additives may be simultaneously added in accordance with an embodiment.

In the present invention, for adding the additive to the water-containing EVOH in the extruder (X), the position of adding the additive to the extruder (X) is preferably in a position where the water-containing EVOH in the extruder (X) is in a molten state from the perspective of sufficiently exhibiting the effects of the present invention. In particular, the additive is preferably added to the water-containing EVOH in a water-containing and molten state. The extruder (X) preferably has a kneading area, and in particular, the position of adding the additive is preferably the kneading area of the extruder (X) from the perspective of facilitating uniform mixing of the additive to the water-containing EVOH.

The form of adding the additive is not particularly limited. Examples of the form include a method comprising adding the additive as dry powder to the extruder (X), a method comprising adding the additive in a paste impregnated with a solvent, a method comprising adding the additive in a state of being suspended in a liquid, a method comprising adding the additive as a solution by being dissolved in a solvent, and the like. From the perspective of controlling the amount for addition and uniformly dispersing the additive in the water-containing EVOH, the method comprising adding the additive as a solution where the additive is dissolved in a solvent is particularly preferred. Although such a solvent is not particularly limited, water is preferred from the perspective of the solubility of the additive, the advantage of costs, the handleability, the safety of the working environment, and the like. That is, the additive is preferably an aqueous solution containing at least one selected from the group consisting of carboxylic acid, a boron compound, a phosphoric acid compound, an alkali metal salt, and an alkaline earth metal salt. The method of addition preferably adds the additive from one or more areas to the extruder (X).

For adding the additive as a solution to the water-containing EVOH, the lower limit of the amount to add the solution is preferably 1 part by mass or more based on 100 parts by dry mass of the EVOH, more preferably 3 parts by mass or more, and even more preferably 4 parts by mass or more. In addition, the upper limit of the amount to add the solution is preferably 50 parts by mass or less based on 100 parts by dry mass of the EVOH, more preferably 30 parts by mass or less, and even more preferably 20 parts by mass or less. The amount to add the solution of 1 part by mass or more tends to facilitate adjustment of the concentration of the solution and tends to cause good dispersibility of the additive in the water-containing EVOH. In addition, the amount of 50 parts by mass or less tends to facilitate controlling of the water content of the water-containing EVOH resin composition pellets to be obtained.

As long as the effects of the present invention are not inhibited, EVOH pellets different from the water-containing EVOH pellets may be simultaneously fed to the extruder (X). The EVOH pellets different from the water-containing EVOH pellets may be dry blended with the water-containing EVOH pellets in advance to be put in the material feed area 1 of the extruder (X), may be simultaneously put in the material feed area 1 without being dry blended with the water-containing EVOH pellets, or may be separately put in a material feed area different from that for the water-containing EVOH pellets (using the extruder (X) provided with two material feed areas). Among them, the method comprising separately putting the water-containing EVOH pellets and the EVOH pellets different from the water-containing EVOH pellets from the different material feed areas is excellent from the perspective of quantitatively putting the pellets and reducing variation in the quality.

In addition, as long as the effects of the present invention are not impaired, other components may be added to the extruder (X). Examples of such another component include inorganic materials, plasticizers, lubricants, stabilizers, surfactants, colorants, antioxidants, ultraviolet absorbers, antistatics, desiccants, crosslinking agents, metal salts, fillers, reinforcing agents, such as various fibers, and the like. These other components may be introduced into the extruder directly in a solid state, such as powder, or as a melt while they are preferably blended as a solute contained in a solution or as a dispersoid contained in a dispersion from the perspective of uniform dispersion in the water-containing EVOH resin composition pellets to be obtained and inhibition of variation in the amount to be added. As the solution and the dispersion, an aqueous solution and a water dispersion is preferred, respectively. When these other components are in a solid state, such as powder, they may be dry blended with the water-containing EVOH pellets to be put in the material feed area 1 of the extruder (X) in advance or may be simultaneously put without being dry blended. When these other components are blended as a solute contained in a solution or a dispersoid contained in a dispersion, they may be added from the minor component addition area 3 simultaneously with the additive of the present invention or may be added from, by providing a new addition area, the area separate from the additive.

The temperature $T_0$ of the melt containing the EVOH, the additive, and water in the extruder (X) has to be from 70°C to 180°C. A temperature $T_0$ of less than 70°C may cause insufficient fluidity of the water-containing EVOH and gelation or blockage in the vessel. The temperature $T_0$ is preferably 80°C or more, more preferably 110°C or more, even more preferably 125°C or more, even more preferably 140°C or more, and particularly preferably 155°C or more. Meanwhile, a temperature $T_0$ of more than 180°C causes the EVOH resin composition to have a markedly degraded hue. The temperature $T_0$ is preferably 175°C or less, more preferably 170°C or less, and even more preferably 165°C or less. In this situation, the temperature $T_0$ of the melt refers to a temperature detected by the temperature sensor in contact with the melt provided in the cylinder of the extruder (X), and a detection site is near the outlet port at a distal end of the extruder (X). The temperature $T_0$ may be adjusted by the temperature of the water-containing EVOH pellets to be fed to the extruder (X), the cylinder temperature of the extruder (X), the number of screw rotations of the extruder (X), and the like.

In the production method of the present invention, the cylinder temperature $T_1$ of the extruder (X) has to be from 65°C to 175°C. A cylinder temperature $T_1$ of less than 65°C causes insufficient fluidity of the water-containing EVOH and a risk of causing gelation and blockage in the vessel. The temperature $T_1$ is preferably 70°C or more, more preferably 75°C or more, even more preferably 85°C or more, even more preferably 90°C or more, and particularly preferably 95°C or more. Meanwhile, the temperature $T_1$ of 175°C or less causes the EVOH resin composition thus obtained to have a good hue. The temperature $T_1$ is preferably 165°C or less, more preferably 150°C or less, even more preferably 135°C or less, still more preferably 130°C or less, and particularly preferably 125°C or less. In this situation, the cylinder temperature $T_1$ means the highest temperature of the cylinder temperatures in a position on a downstream side from the site of feeding the material to the extruder (X).

In the production method of the present invention, the temperature $T_0$ (°C) of the melt in the extruder (X) and the cylinder temperature $T_1$ (°C) of the extruder (X) satisfy the expression (1) below.

$$5 \leq T_0 - T_1 \leq 100 \qquad (1)$$

In the present invention, as indicated by the expression (1) above, the temperature $T_0$ 5°C or more higher than the temperature $T_1$ surprisingly causes less foaming in the EVOH resin composition to be obtained. $T_0$-$T_1$ is preferably 15 or more, more preferably 25 or more, even more preferably 35 or more, still more preferably 40 or more, and particularly preferably 45 or more. Meanwhile, $T_0$-$T_1$ of 100 or less causes the EVOH resin composition thus obtained to have a good hue. $T_0$-$T_1$ is preferably 90 or less, more preferably 85 or less, even more preferably 80 or less, still more preferably 75 or less, and particularly preferably 65 or less. The temperature $T_0$-$T_1$ may be adjusted by changing the screw configuration, the cylinder configuration, the temperature of the EVOH pellets to be fed, the cylinder temperature, the number of screw rotations, and the like.

As described earlier, the saponification catalyst residues may be washed in the extruder to be removed, and such a step may also be performed in the extruder (X). Specifically, it is possible to feed the water-containing EVOH pellets to the extruder (X), pour a washing liquid from at least one area of the extruder (X), wash the resin, and discharge the washing liquid from at least one area downstream from the pouring area. This method is preferred from the perspective of allowing efficient and space saving washing. In this case, the saponification catalyst residues contained in the water-containing EVOH pellets to be fed to the extruder (X) are preferably an alkali metal salt. When the washing is carried out in the extruder (X), the content of the alkali metal salt contained in the water-containing EVOH pellets to be fed to the extruder (X) is preferably in a range from 0.1 to 5 mass% in terms of metal.

In addition, in this case, the alkali metal salt contained in the water-containing EVOH after washing is preferably 0.05 mass% or less in terms of metal. The content is more preferably 0.04 mass% or less and even more preferably 0.03 mass% or less.

The washing liquid to be used is not particularly limited as long as the liquid is capable of removing the saponification catalyst residues, while the liquid is preferably an aqueous solution of an acid with a pKa of 3.5 or more at 25°C. Using an aqueous solution of an acid with a pKa of less than 3.5 at 25°C causes a risk of unsatisfactory coloring resistance and interlayer adhesion of the EVOH. Such an acid with a pKa of 3.5 or more is preferably carboxylic acid, and from the perspective of costs and the like, particularly preferably acetic acid and propionic acid. The concentration of the acid in the case of using the aqueous solution of the acid is preferably from 0.01 to 10 g/liter and more preferably from 0.1 to 2 g/liter. The amount of the washing liquid to be poured is preferably from 0.1 to 100 liters per 1 kg of the mass of the resin to be put.

The method of pouring the washing liquid is not particularly limited as long as the method is capable of pouring the washing liquid into the extruder (X), and examples of the method include a method comprising injecting using a plunger pump and the like. The method of discharging the washing liquid is not particularly limited as long as the method is capable of discharging the liquid from the extruder (X) using a discharge area arranged downstream from the pouring area, and preferred examples of the method include a dewatering slit or a dewatering pore. It should be noted that a plurality of pouring areas or a plurality of discharge areas may be arranged. Such washing is preferably carried out upstream from the site of feeding the additive in the extruder (X) from the perspective of containing an appropriate amount of the additive in the water-containing EVOH resin composition pellets to be obtained.

In the present invention, the EVOH in a water-containing state is preferably dewatered in the extruder (X) after or without washing as above in the extruder (X). It is also preferred to degas the EVOH. Specifically, water and/or water vapor is preferably discharged from at least one area of the extruder (X). In this situation, the discharge method is not particularly limited and examples of the method include a method comprising discharging from a dewatering slit, a dewatering pore or a vent port arranged in the cylinder of the extruder (X). Preferred examples of the dewatering slit include a wedge wire dewatering slit and a screen mesh dewatering slit. Examples of the vent port include a vacuum vent to remove water vapor under a reduced pressure and an open vent to remove water vapor at atmospheric pressure.

Among them, preferred examples include a dewatering slit and a dewatering pore. Since they are capable of discharging both water and water vapor, they allow efficient removal of water from the resin with a high water content, and at this point, they are often more effective than a vent port capable of discharging only water vapor in general. For discharging water using the vent port, the resin is prone to be attached to the vent port, and such an attached resin is sometimes degraded and mixed in the extruder (X), and at this point as well, a dewatering slit and a dewatering pore are preferred. Moreover, using a dewatering pore sometimes causes protrusion of the melt from the pore, and at this point, a dewatering slit is preferably used.

It should be noted that the above dewatering mechanism may be used singly, may be used a plurality of an identical kind, or may be used in combination of different kinds. For example, it is possible to remove water to some extent from a resin with a high water content using a dewatering slit and then to further remove water from a vent port on the downstream side.

The dewatering operation described above is performed to adjust the water content of the EVOH in the extruder (X) and after extrusion. In order to prevent the water content of the EVOH from being reduced more than necessary, water may be fed to the extruder (X) in addition to or without the dewatering operation described above. The method of feeding water to the extruder (X) is not particularly limited and examples of the method include a method comprising injecting using a plunger pump and the like.

In the present invention, the water content of the water-containing EVOH resin composition immediately after extrusion from the extruder (X) has to be from 10 to 35 mass%. The water content of 35 mass% or less inhibits foaming in the EVOH resin composition. The water content is preferably 32 mass% or less, more preferably 28 mass% or less, even more preferably 26 mass% or less, still more preferably 24 mass% or less, and particularly preferably 22 mass% or less. Meanwhile, in some cases, the water content is preferably 10 mass% or more, 12 mass% or more, 14 mass% or more, 16 mass% or more, and 18 mass% or more.

In the present invention, a water removal rate is obtained by an equation below using a water content A (parts by mass) per 100 parts by mass of the EVOH in the water-containing EVOH pellets to be fed to the extruder (X) and a water content B (parts by mass) per 100 parts by mass of the EVOH in the water-containing EVOH resin composition immediately after extrusion from the extruder (X), and the water removal rate is preferably 0.1 or more, more preferably 0.3 or more, even more preferably 0.4 or more, still more preferably 0.45 or more, and particularly preferably 0.5 or more. Meanwhile, the water removal rate may be 0.95 or less, 0.9 or less, 0.85 or less, 0.8 or less, or 0.75 or less.

$$\text{Water Removal Rate} = (A-B)/A$$

For pelletizing the water-containing EVOH resin composition extruded from the extruder (X), the method is not particularly limited and examples of the method include a method comprising feeding the water-containing EVOH resin composition to the extruder (X) and directly cutting in a molten state to produce pellets. Preferred examples of the direct cutting method include a hot cutting system or an underwater cutting system, and the nozzle preferably has a diameter from 2 to 5 mm$\varphi$ ($\varphi$ denotes a diameter. Hereinafter the same.). The pellets thus produced preferably have a size of, for example, 1 mm or more and 10 mm or less in diameter in the case of a spherical shape.

The water-containing EVOH resin composition pellets thus obtained are usually subjected to a drying step. The EVOH resin composition pellets after drying preferably have a water content of 1.0 mass% or less and more preferably 0.5 mass% or less. Although the drying method is not particularly limited, preferred examples of the method include ventilation drying, fluidized drying, and the like. It is also possible to employ a multi-stage drying step combining some drying methods. Among them, a preferred method comprises drying by fluidized drying at first and then drying by ventilation drying.

In the resin constituting the EVOH resin composition pellets, the proportion of the EVOH is preferably 90 mass% or more, more preferably 95 mass% or more, and even more preferably 99 mass% or more, and particularly preferably the resin consists only of the EVOH. In the EVOH resin composition pellets, the proportion of the EVOH and the additive is preferably 90 mass% or more, more preferably 95 mass% or more, and even more preferably 99 mass% or more, and the EVOH resin composition pellets particularly preferably consist substantially only of the EVOH and the additive.

The EVOH resin composition pellets thus obtained usually have a melt flow rate (MFR) (190°C, under a load of 2160 g) from 0.5 to 100 g/10 minutes, preferably from 1 to 50 g/10 minutes, and more preferably from 1.5 to 20 g/10 minutes. The MFR of 0.5 g/10 minutes or more tends to cause good moldability, and the MFR of 100 g/10 minutes or less tends to cause shaped articles to be obtained to have good mechanical properties.

The EVOH resin composition pellets thus obtained are used for various applications in addition to being shaped into various shaped articles, such as films, sheets, containers, pipes, and fibers, by melt molding.

EXAMPLES

The present invention is more specifically described below with reference to Examples. In Examples and Comparative Examples described later, analysis and evaluation were made by the following methods.

(1) Measurement of Water Content of Pellets

Using a halogen moisture analyzer, the water content of the pellets used or obtained in Examples and Comparative Examples was measured by heat drying mass measurement in the conditions of a drying temperature of 180°C, a drying time of 20 minutes, and 10 g of the amount of a sample. The water content of the pellets was obtained using the following equation.

$$\text{Water Content (mass\%) = (Mass before Drying - Mass after Drying)/Mass}$$

$$\text{before Drying} \times 100$$

(2) Determination of Carboxylic Acid

In 100 mL of deionized water, 20 g of EVOH resin composition pellets obtained in Examples and Comparative Examples was put and was subjected to extraction by heating at 95°C for 6 hours. The extracted liquid thus obtained was subjected to neutralization titration with a 0.01 mol/L sodium hydroxide solution using phenolphthalein as an indicator to calculate the carboxylic acid content in the EVOH resin composition pellets.

(3) Determination of Metal Salt, Boron Compound, and Phosphoric Acid Compound

In a Teflon® pressure vessel, 0.5 g of the EVOH resin composition pellets obtained in Examples and Comparative Examples were put, and 5 mL of concentrated nitric acid was added thereto for decomposition at room temperature for 30 minutes. A lid was put on the pressure vessel after decomposition, and heating was carried out using a wet decomposition apparatus ("MWS-2" by ACTAC Co., Ltd.) at 150°C for 10 minutes and then at 180°C for 5 minutes for further decomposition, followed by cooling to room temperature. The treatment liquid was transferred to a 50 mL volumetric flask and diluted with deionized water to prepare a sample solution for measurement. Using an ICP emission spectrophotometer ("OPTIMA 4300DV" by PerkinElmer, Inc.), the contents of metal elements, boron elements, and phosphorus elements in the sample solution were measured. From the values thus obtained, the metal salt content in terms of the metal element, the boron compound content in terms of the boron element, and the phosphoric acid content in terms of the phosphorus element in the EVOH resin composition pellets were obtained.

(4) Foaming

By collecting 100 g of the EVOH resin composition pellets obtained in Examples and Comparative Examples, the ratio (mass%) of the pellets in which a defect in shape, such as pitting and foaming, was found in the pellets was obtained and evaluated by the following criteria. The pellets with the ratio of those with a defect in shape of less than 5 mass% (evaluated as A or B) can bear practical use.

Evaluation

 A: less than 1 mass%
 B: 1 mass% or more and less than 5 mass%
 C: 5 mass% or more

(5) Coloring

Using the EVOH resin composition pellets obtained in Examples and Comparative Examples, a film was formed in the following conditions to obtain a 20 μm monolayer film. The film after 1 hour from the start of film formation was wound around a paper tube and the degree of coloration on the end surfaces of the film was visually evaluated by the following criteria. The pellets evaluated as A or B can bear practical use.

Film Formation Conditions

 Extrusion Temperature: Feed Area / Compression Area /

 Measurement Area / Die = 170/210/210/210°C

 Number of Screw Rotations: 40 rpm
 Drawing Roll Temperature: 80°C

Evaluation

A: No coloring was found.
B: Slight yellowing was found.
C: Yellowing was found.

(6) Melt Flow Rate (MFR)

The dried resin composition pellets obtained in Examples and Comparative Examples were filled in a cylinder with an inner diameter of 9.55 mm and a length of 162 mm of a melt indexer L244 (manufactured by Takara Kogyo Kabushiki Kaisha) and melted at 190°C, and then a load was uniformly applied on the melted resin composition using a plunger with a mass of 2,160 g and a diameter of 9.48 mm. The amount (g/10 minutes) of the resin composition was measured that was extruded per unit time from an orifice with a diameter of 2.1 mm provided at the center of the cylinder to define this amount as the MFR. It should be noted that the MFR was measured in Example 3 by melting the pellets at 210°C.

Example 1

Water-containing EVOH pellets (ethylene content of 32 mol%, degree of saponification of 99.99 mol%, alkali metal salt (in terms of metal) of 20 ppm) with a water content of 40 mass% at a temperature of 60°C were put in a twin-screw extruder. The cylinder configuration and the screw configuration of the twin-screw extruder are illustrated in Fig. 1. With the cylinder temperature $T_1$ (the highest temperature in a position on a downstream side from the material feed area 1) of 100°C and the number of screw rotations of 600 rpm, an additive of an aqueous solution of acetic acid / boric acid / sodium acetate / magnesium acetate / potassium dihydrogen phosphate was added from the minor component addition area 3, illustrated in Fig. 1, at a distal end on an extrusion side. The amount of the water-containing EVOH pellets put per unit time was 34.6 kg/hr (including the mass of contained water), and the amount of the additive put per unit time was 1.7 L/hr. The additive was an aqueous solution containing 5.4 g/L of acetic acid, 19 g/L of boric acid, 9.6 g/L of sodium acetate trihydrate, 3.9 g/L of magnesium acetate tetrahydrate, and 2.2 g/L of potassium dihydrogen phosphate. The specification of the twin-screw extruder was as follows.

| | |
|---|---|
| Type | Twin-screw extruder |
| LID | 45.5 |
| Diameter | 30 mmΦ |
| Screw | Co-rotating fully intermeshing type |
| Die diameter | 3.0 mmΦ |

The twin-screw extruder illustrated in Fig. 1 was configured with a material feed area 1, a deliquoring area 2, and a minor component addition area 3, and the deliquoring area 2 was provided with a dewatering slit 5. The screws were prepared by combining full flight screws 6, reverse flight screws 7, and seal rings 8 as illustrated in Fig. 1. Moreover, a temperature sensor 4 was arranged at an end of the cylinder.

The temperature $T_0$ of the melt in the twin-screw extruder was 160°C. The temperature $T_0$ was measured using the temperature sensor 4 in contact with the melt arranged at the end of the cylinder. The water-containing EVOH resin composition in a molten state extruded from the twin-screw extruder was cut with a hot cutter to obtain water-containing EVOH resin composition pellets. The water content of the water-containing EVOH resin composition pellets immediately after production was measured in accordance with the method described in (1) above. The results are shown in Table 1. The water-containing EVOH resin composition pellets thus obtained were dried at 90°C for 15 hours using a fluidized-bed dryer and subsequently dried at 105°C for 15 hours using a ventilation dryer to obtain EVOH resin composition pellets with a water content of 0.2 mass%. The EVOH resin composition pellets were subjected to the determination of carboxylic acid, the determination of the metal salt, the boron compound, and the phosphoric acid compound, the evaluation of foaming and coloring, and the measurement of MFR in accordance with the methods described in (2) - (6) above. The results are shown in Table 1.

Examples 2-7, Comparative Examples 1 - 3, 6

EVOH resin composition pellets were prepared and evaluated in the same method as that in Example 1 except for changing the ethylene unit content percentage in the EVOH, the water content and the temperature of the water-containing EVOH pellets to be fed to the extruder, the number of screw rotations, cylinder temperature $T_1$, the temperature $T_0$ of the melt in the twin-screw extruder, and the water content of the water-containing EVOH resin composition pellets. The results are shown in Table 1.

Example 8

EVOH resin composition pellets were prepared and evaluated in the same method as that in Example 1 except for using, as the additive, an aqueous solution containing 5.4 g/L of acetic acid and 9.6 g/L of sodium acetate trihydrate. The results are shown in Table 1.

Comparative Example 4

Water-containing EVOH pellets (ethylene content of 32 mol%, degree of saponification of 99.98 mol%, alkali metal salt (in terms of metal) of 20 ppm) with a water content of 39 mass% at a temperature of 50°C were put in a twin-screw extruder. The cylinder configuration and the screw configuration of the twin-screw extruder are illustrated in Fig. 2. With the cylinder temperature $T_1$ of 100°C and the number of screw rotations of 300 rpm, an additive of an aqueous acetic acid / boric acid / sodium acetate / magnesium acetate / potassium dihydrogen phosphate solution was added from the minor component addition area 3, illustrated in Fig. 2, at a distal end on an extrusion side. The amount of the water-containing EVOH pellets put per unit time was 10.7 kg/hr (including the mass of contained water), and the amount of the additive put per unit time was 0.65 L/hr. The additive was an aqueous solution containing 4.3 g/L of acetic acid, 15 g/L of boric acid, 7.6 g/L of sodium acetate trihydrate, 3.9 g/L of magnesium acetate tetrahydrate, and 2.2 g/L of potassium dihydrogen phosphate. The specification of the twin-screw extruder was as follows.

| | |
|---|---|
| Type | Twin-screw extruder |
| LID | 45.5 |
| Diameter | 30 mmΦ |
| Screw | Co-rotating fully intermeshing type |
| Die | diameter 3.0 mmΦ |

The twin-screw extruder illustrated in Fig. 2 was configured with a material feed area 1, a deliquoring area 2, and a minor component addition area 3, and the deliquoring area 2 was provided with a dewatering slit 5. The screws were prepared by combining full flight screws 6 and reverse flight screws 7 as illustrated in Fig. 2. Moreover, a temperature sensor 4 was arranged at an end of the cylinder.

The temperature $T_0$ of the melt in the twin-screw extruder was 100°C. The temperature $T_0$ was measured using the temperature sensor 4 arranged at the end of the cylinder. The EVOH resin in a molten state extruded from the twin-screw extruder was cut with a hot cutter to obtain water-containing EVOH resin composition pellets. The water content of the water-containing EVOH resin composition pellets immediately after production was measured in accordance with the method described in (1) above. The results are shown in Table 1. The water-containing EVOH resin composition pellets thus obtained were dried at 90°C for 15 hours using a fluidized-bed dryer and subsequently dried at 105°C for 15 hours using a ventilation dryer to obtain EVOH resin composition pellets with a water content of 0.2 mass%. The EVOH resin composition pellets were subjected to the determination of carboxylic acid, the determination of the metal salt, the boron compound, and the phosphoric acid compound, the evaluation of foaming and coloring, and the measurement of MFR in accordance with the methods described in (2) - (6) above. The results are shown in Table 1.

Comparative Example 5

Water-containing EVOH pellets (ethylene content of 32 mol%, degree of saponification of 99.95 mol%) with a water content of 39 mass% were fed to a top portion of a tower treatment column with a diameter of 0.8 m and a height of 4 m at 33 kg/hr. A treatment liquid (50°C) of an aqueous acetic acid / sodium acetate / magnesium acetate / potassium dihydrogen phosphate solution was added at 500 L/hr from a lower portion of the treatment column. The composition of the treatment liquid was an aqueous solution containing 1.7 g/L of acetic acid, 0.67 g/L of sodium acetate, 1.84 g/L of magnesium acetate tetrahydrate, and 0.77 g/L of potassium dihydrogen phosphate. The treated pellets were continuously discharged from a bottom portion of the treatment column. EVOH resin composition pellets were prepared and evaluated in the same method as that in Comparative Example 4 except for using the water-containing EVOH pellets thus obtained with a water content of 39 mass% at a temperature of 50°C, changing the cylinder configuration and the screw configuration of the twin-screw extruder as illustrated in Fig. 3, and adding no additive to the twin-screw extruder. The results are shown in Table 1.

[Table 1]

| | | Unit | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Water-Containing EVOH Pellet | Ethylene Unit Content | mol% | 32 | 32 | 24 | 44 | 32 | 32 | 32 | 32 | 32 | 32 | 32 | 32 | 32 | 32 |
| | Temperature | °C | 60 | 20 | 50 | 50 | 60 | 40 | 60 | 60 | 60 | 60 | 60 | 50 | 50 | 50 |
| | Water Content | mass % | 40 | 40 | 46 | 50 | 43 | 40 | 40 | 40 | 40 | 40 | 50 | 39 | 39 | 39 |
| Additive fed to Extruder | | | 1) | 1) | 1) | 1) | 1) | 1) | 1) | 2) | 1) | 1) | 1) | 3) | -4) | 1) |
| Extruder | Number of Screw Rotations | rpm | 600 | 600 | 600 | 600 | 750 | 450 | 350 | 600 | 300 | 250 | 200 | 300 | 300 | 420 |
| | Screw Configuration | - | X | X | X | X | X | X | X | X | X | X | X | Y | Z | X |
| | Cylinder Configuration | - | a | a | a | a | a | a | a | a | a | a | a | b | b | a |
| | Cylinder Temperature $T_1$ | °C | 100 | 100 | 110 | 110 | 80 | 140 | 90 | 100 | 100 | 100 | 120 | 100 | 100 | 170 |
| | Temperature $T_0$ of Melt | °C | 160 | 160 | 160 | 160 | 150 | 173 | 100 | 160 | 100 | 90 | 130 | 100 | 100 | 210 |
| | $T_0-T_1$ | °C | 60 | 60 | 50 | 50 | 70 | 33 | 10 | 60 | 0 | -10 | 10 | 0 | 0 | 40 |
| Water Content of Water-Containing EVOH Resin Composition | | mass % | 20 | 25 | 31 | 23 | 30 | 18 | 21 | 20 | 20 | 20 | 40 | 20 | 18 | 3 |

EP 4 269 475 A1

16

(continued)

| | | Unit | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Content (ppm) of Additive (Solid Content) in EVOH Resin Composition | AcOH | | 300 | 300 | 300 | 300 | 300 | 300 | 300 | 300 | 300 | 300 | 300 | 300 | 200 | 300 |
| | B | | 262 | 262 | 262 | 262 | 262 | 262 | 262 | - | 262 | 262 | 262 | 262 | - | 262 |
| | P | | 93 | 93 | 93 | 93 | 93 | 93 | 93 | - | 93 | 93 | 93 | 93 | 90 | 93 |
| | Na | | 130 | 130 | 130 | 130 | 130 | 130 | 130 | 130 | 130 | 130 | 130 | 130 | 120 | 130 |
| | K | | 38 | 38 | 38 | 38 | 38 | 38 | 38 | - | 38 | 38 | 38 | 38 | 35 | 38 |
| | Mg | | 35 | 35 | 35 | 35 | 35 | 35 | 35 | - | 35 | 35 | 35 | 35 | 60 | 35 |
| MFR (190°C) | | g/10 min | 1.6 | 1.6 | 2.5[5] | 1.8 | 1.6 | 1.6 | 1.6 | 1.6 | 1.6 | 1.6 | 1.6 | 1.6 | 12 | 1.6 |
| Evaluation | Water Removal Rate | - | 0.62 | 0.48 | 0.47 | 0.70 | 0.44 | 0.67 | 0.61 | 0.62 | 0.62 | 0.62 | 0.34 | 0.62 | 0.66 | 0.92 |
| | Foaming | - | A | B | A | B | B | B | B | A | C | C | C | C | C | A |
| | Color | - | A | B | B | A | A | B | A | B | A | A | C | A | B | C |

1) Aqueous solution containing 5.4 g/L of acetic acid, 19 g/L of boric acid, 9.6 g/L of sodium acetate trihydrate, 3.9 g/L of magnesium acetate tetrahydrate, and 2.2 g/L of potassium dihydrogen phosphate
2) Aqueous solution containing 5.4 g/L of acetic acid and 9.6 g/L of sodium acetate trihydrate
3) Aqueous solution containing 4.3 g/L of acetic acid, 15 g/L of boric acid, 7.6 g/L of sodium acetate trihydrate, 3.9 g/L of magnesium acetate tetrahydrate, and 2.2 g/L of potassium dihydrogen phosphate
4) Water-containing EVOH with minor component added in advance was put in extruder
5) MFR (210°C)

Comparative Example 7

EVOH resin composition pellets were intended to be prepared in the same method as that in Example 1 except for changing the temperature of feeding the water-containing pellets to 100°C, however the pellets stuck to each other when put in the twin-screw extruder and thus it was not possible to obtain intended EVOH resin composition pellets.

DESCRIPTION OF REFERENCE SIGNS

1    Material Feed Area
2    Deliquoring Area
3    Minor Component Addition Area
4    Temperature Sensor
5    Dewatering Slit
6    Full Flight Screw
7    Reverse Flight Screw
8    Seal Ring

**Claims**

1. A method of producing an ethylene-vinyl alcohol copolymer resin composition, comprising feeding water-containing pellets of an ethylene-vinyl alcohol copolymer from 0°C to 80°C and an additive to an extruder (X) for melt kneading, wherein

   the additive includes at least one selected from the group consisting of carboxylic acid, a boron compound, a phosphoric acid compound, an alkali metal salt, and an alkaline earth metal salt,
   the additive is added to the ethylene-vinyl alcohol copolymer in the extruder (X),
   a melt in the extruder (X) has a temperature $T_0$ from 70°C to 180°C and the extruder (X) has a cylinder temperature $T_1$ from 65°C to 175°C,
   $T_0$ and $T_1$ satisfy an expression (1) below

$$5 \leq T_0\text{-}T_1 \leq 100 \qquad (1),$$

   and
   the water-containing pellets fed to the extruder (X) has a water content from 20 to 60 mass% and a water-containing resin composition immediately after extrusion from the extruder (X) has a water content from 10 to 35 mass%.

2. The production method according to Claim 1, wherein the additive is an aqueous solution containing at least one selected from the group consisting of carboxylic acid, a boron compound, a phosphoric acid compound, an alkali metal salt, and an alkaline earth metal salt.

[FIG. 1]

Cylinder configuration: a

Screw configuration: X

[FIG. 2]

Cylinder configuration: b

Screw configuration: Y

[FIG. 3]

Cylinder configuration: b

Screw configuration: Z

## INTERNATIONAL SEARCH REPORT

| International application No. |
|---|
| **PCT/JP2021/047995** |

| A. | CLASSIFICATION OF SUBJECT MATTER |
|---|---|

*C08J 3/20*(2006.01)i; *C08K 5/09*(2006.01)i; *C08K 5/098*(2006.01)i; *C08L 29/04*(2006.01)i; *C08K 3/32*(2006.01)i; *C08K 3/38*(2006.01)i
FI:  C08J3/20 Z CEX; C08L29/04 S; C08K5/09; C08K5/098; C08K3/32; C08K3/38

According to International Patent Classification (IPC) or to both national classification and IPC

| B. | FIELDS SEARCHED |
|---|---|

Minimum documentation searched (classification system followed by classification symbols)

C08J3/20; C08K5/09; C08K5/098; C08L29/04; C08K3/32; C08K3/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2002-284811 A (KURARAY CO LTD) 03 October 2002 (2002-10-03)<br>claims, paragraphs [0052]-[0075], [0098]-[0118], examples | 1, 2 |
| X | JP 2001-098077 A (KURARAY CO LTD) 10 April 2001 (2001-04-10)<br>claims, paragraphs [0033]-[0072], [0090]-[0114], examples | 1, 2 |
| A | JP 2020-090646 A (KURARAY CO LTD) 11 June 2020 (2020-06-11)<br>claims, examples, entire text | 1, 2 |
| A | JP 2002-284886 A (KURARAY CO LTD) 03 October 2002 (2002-10-03)<br>claims, examples, entire text | 1, 2 |
| A | JP 2010-007042 A (NIPPON SYNTHETIC CHEM IND CO LTD) 14 January 2010<br>(2010-01-14)<br>claims, examples, entire text | 1, 2 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/047995**

| Patent document cited in search report | | | Publication date (day/month/year) | Patent family member(s) | | | Publication date (day/month/year) |
|---|---|---|---|---|---|---|---|
| JP | 2002-284811 | A | 03 October 2002 | US | 2002/0100997 | A1 | |
| | | | | claims, paragraphs [0075]-[0100], [0122]-[0171], examples | | | |
| | | | | EP | 1225185 | A2 | |
| | | | | TW | 546314 | B | |
| JP | 2001-098077 | A | 10 April 2001 | JP | 2001-96529 | A | |
| | | | | US | 2004/0082690 | A1 | |
| | | | | claims, paragraphs [0086]-[0128], [0151]-[0306], examples | | | |
| | | | | JP | 2001-96530 | A | |
| | | | | JP | 2001-96606 | A | |
| | | | | JP | 2001-98080 | A | |
| | | | | JP | 2005-329718 | A | |
| | | | | US | 6686405 | B1 | |
| | | | | EP | 1072616 | A2 | |
| | | | | EP | 1493758 | A1 | |
| | | | | KR | 10-2001-0049861 | A | |
| | | | | KR | 10-2004-0079344 | A | |
| | | | | CN | 1287051 | A | |
| | | | | CN | 1490350 | A | |
| JP | 2020-090646 | A | 11 June 2020 | US | 2020/0339771 | A1 | |
| | | | | claims, examples | | | |
| | | | | WO | 2019/131844 | A1 | |
| | | | | TW | 201936663 | A | |
| | | | | CN | 111542568 | A | |
| JP | 2002-284886 | A | 03 October 2002 | (Family: none) | | | |
| JP | 2010-007042 | A | 14 January 2010 | US | 2010/0289172 | A1 | |
| | | | | claims, examples | | | |
| | | | | WO | 2009/084510 | A1 | |
| | | | | EP | 2230274 | A1 | |
| | | | | CN | 101910294 | A | |
| | | | | TW | 200940635 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000239316 A
- JP 2002284811 A